# EUROPEAN PATENT APPLICATION

(11) **EP 0 521 236 A2**
(43) Date of publication of application: **07.01.1993**
(21) Application number: 92101993.1
(22) Date of filing: 06.02.1992
(51) Int. Cl.: G11B 19/00, G11B 19/02, G11B 19/20, G11B 19/12

(54) **Method and apparatus for identifying signal format for use in disk player**

(30) Priority: 03.07.1991 JP 163104/91
(71) Applicant: PIONEER ELECTRONIC CORPORATION, Meguro-ku Tokyo 153 (JP)
(72) Inventor: Sawabe, Takao, c/o Pioneer Tokorozawa Plant, Saitama (JP); Iga, Masahito, c/o Pioneer Tokorozawa Plant, Saitama (JP); Sakakibara, Takashi, c/o Pioneer Tokorozawa Plant, Saitama (JP)
(74) Representative: Klingseisen, Franz, Dipl.-Ing.

(57) **Abstract**

Methods and apparatus for identifying signal format automatically identify the format of the signal read from any one of a plurality of disks of different signal formats can automatically be identified without use of any particular circuit for signal format identification, for use in a disk player capable of playing any one of such disks of different signal format. In operation, the information reading point of a pickup is translated to be positioned in a program area of the disk and the rotation of a loaded disk is started. Each time the rotational speed of the disk comes almost equal to a normal rotational speed of each of the plurality of disks of different signal format, it is judged whether or not a signal processing corresponding to the signal format of one of the plurality of disks of different signal formats, whose normal rotational speed is almost equal to a current value of the rotational speed of the disk, is appropriate for processing a read-out signal of the pickup. The signal format is identified by executing the judgment successively.

## Description

### BACKGROUND OF THE INVENTION

### 1. Field of the Invention

The present invention relates to method and apparatus for identifying signal format for use in a disk player capable of playing a variety of disks carrying signals of different signal formats.

### 2. Description of Background Information

There are several types of signal format for signals to be recorded onto video disks, according to television systems, namely NTSC, PAL, and MUSE systems.

In disk players for playing disks of different signal formats, a signal processing circuit for processing the signal retrieved from the disk is generally constructed to allow switching among a plurality of states, each for a signal processing matching the corresponding signal format. It is necessary for such disk players, prior to start processing, to identify the signal format of the signal recorded on the disk and to switch the signal processing circuit to a state allowing the signal processing matching the identified signal format.

As the method for identifying the signal format, a method has been proposed (disclosed in Japanese Patent Application Laid-open No. 60-87882) in which a notch is provided in a given position of a disk case holding a disk, so that the signal format can be identified by the position of the notch on the disk case, the method being adopted in an electrostatic capacitance type video disk system.

Another method is also known in which the disk is provided, in its innermost part of the recording tracks, with an identification region whose reflectivity is determined by the signal format and the signal format can thus identified by reading the reflectivity (disclosed in Japanese Patent Application Laid-open No. 1-314486).

Each of those methods however has a disadvantage in that it requires, besides the basic structure, an additional structure for identifying the signal format, causing an increased complexity of the structure of disk player.

### SUMMARY AND OBJECT OF THE INVENTION

It is an object of the present invention to provide method and apparatus for identifying signal format, for use in a disk player capable of playing disks carrying signals of different signal formats, in which the signal format of the signal read from the disk can automatically be identified without use of any particular circuit for identifying the signal format.

According to the present invention, a method of identifying signal formats, in a disk player capable of playing a variety of disks carrying signals of different signal formats, comprises the steps of: in response to a command, moving an information reading point of a pickup radially with respect to a loaded disk to a predetermined point which falls in a program area when any one of the disks of different signal formats is selected and loaded into the disk player; starting rotation of the disk and increasing a rotational speed of the disk; each time the rotational speed of the disk comes almost equal to a normal rotational speed, at the predetermined point, of each of the disks of different signal formats, judging whether or not a signal processing corresponding to the signal format of one of the disks of different signal formats which has the normal rotational speed approximately equal to a current value of the rotational speed of the disk at the predetermined point, is appropriate for processing a signal read-out by the pickup; and identifying the signal format of the read-out signal by a result of the judgement.

Also, according to the present invention, an apparatus for identifying signal formats, in a disk player capable of playing a variety of disks carrying signals of different signal formats, comprises: means, in response to a command, for moving an information reading point of a pickup radially with respect to a loaded disk to a predetermined point which falls in a program area when any one of the disks of different signal formats is selected and loaded into the disk player; means for starting rotation of the disk and increasing a rotational speed of the disk; means for judging, each time the rotational speed of the disk comes almost equal to a normal rotational speed at the predetermined point of each of the disks of different signal formats, whether or not a signal processing corresponding to the signal format of one of the disks of different signal formats which has the normal rotational speed approximately equal to a current value of the rotational speed of the disk at the predetermined point, is appropriate for processing a signal read-out by the pickup; and means for identifying the signal format of the read-out signal by a result of the judgement.

In the method and apparatus for identifying signal format for use in a disk player according to the present invention, the information reading point of the pickup is translated to be positioned in a program area of the disk and the rotation of a loaded disk is started. Each time the rotational speed of the disk comes almost equal to a normal rotational speed of each of the disks having different signal formats, it is judged whether or not a signal processing corresponding to the signal format of one of the disks having different signal formats whose normal rotational speed is approximately equal to the current value of the disk's rotational speed is appropriate for processing the read signal produced by the pickup. Then, identification of the signal format of the disk is performed by a result of the judgement.

### BRIEF DESCRIPTION OF THE DRAWINGS

Fig. 1 is a block diagram showing one embodiment of the present invention;
Fig. 2 is a graphic chart showing the relation between normal rotational speeds of six discrete disks which are different from each other in at least either the recording system or the signal format and a relative position of the pickup in a radial direction with respect to the disk;
Figs. 3, 4, and 5 are flowcharts showing the operation of a processor in the embodiment shown in Fig. 1;
Fig. 6 is a block diagram showing another embodiment of the present invention; and
Fig. 7 is a flowchart showing the operation of a processor in the embodiment shown in Fig. 6.

### DETAILED DESCRIPTION OF THE EMBODIMENTS

Preferred embodiments of the present invention will be described in detail referring to the accompanying drawings.

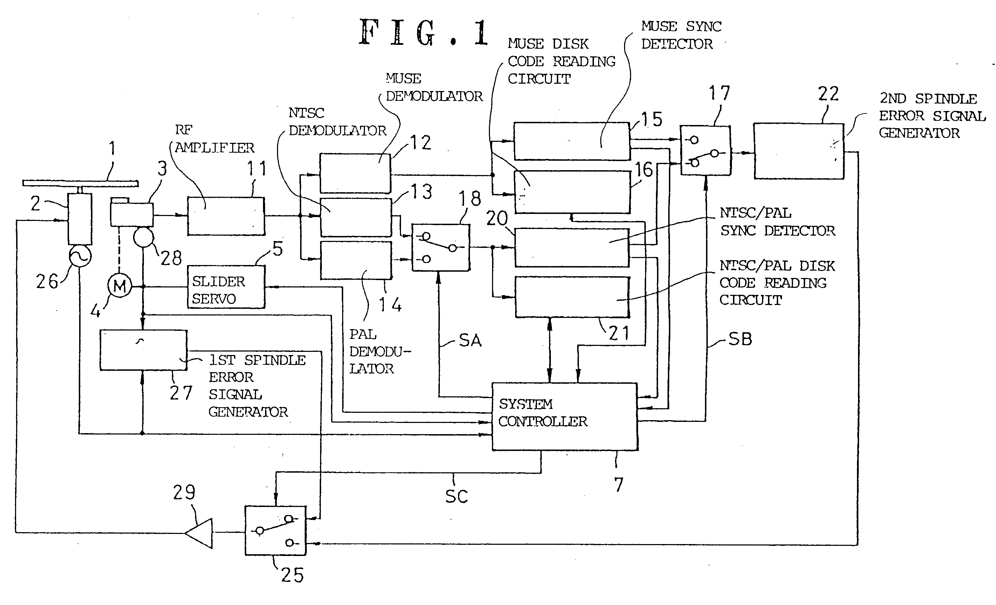

As shown in Fig. 1, a disk 1 is rotated by a spindle motor 2. During rotation of the disk 1, data recorded on the disk 1 is read out by a pickup 3.

The pickup 3 is supported by a slider (not shown) arranged for movement radially of the disk 1. The slider is actuated by a slider motor 4 which is controlled with a slider servo circuit 5 thus determining the movement of the pickup 3 radially of the disk 1. More specifically, the slider servo circuit 5 controls the rotation of the slider motor 4 according to a command signal from a system controller 7 and a low frequency component of an error signal from a tracking servo circuit (not shown) which performs the positioning of an information reading point of the pickup 3 to a target recording track. The system controller 7 is a microcomputer containing a processor, a ROM, a RAM, etc. The system controller 7 is arranged for interception of an FP detection pulse from a MUSE sync detector circuit 15, a horizontal sync signal and a pilot burst detection signal from an NTSC/PAL sync detector circuit 20, output data from a MUSE disk code reading circuit 16 and a NTSC/PAL disk code reading circuit 21, an output voltage from a potentiometer 28, which all will be described later in more detail, and key-entry instruction signals from a data entry unit (not shown). In operation of the system controller 7, an input signal is processed by the processor in accordance with a given program stored in the ROM thus to produce an ON command signal, an OFF command signal, and a switch command signal which are in turn delivered to their respective components.

The output from the pickup 3 is fed to an RF amplifier 11 and also, to a focus servo circuit (not shown) and a tracking servo (also not shown) circuit which both are well known in function and will no further be explained with this embodiment.

An RF signal from the RF amplifier 11 is then transmitted to a the MUSE demodulator circuit 12, an NTSC demodulator circuit 13, or a PAL demodulator circuit 14 where it is demodulated. The demodulated signal from the MUSE 12, NTSC 13, or PAL demodulator circuit 14 is supplied to an image playback processing circuit (not shown) for reproduction of a picture. Simultaneously, a MUSE signal from the MUSE demodulator circuit 12 is fed to both the MUSE sync detector circuit 15 and the MUSE disk code reading circuit 16. The MUSE sync detector circuit 15 produces an P detection pulse upon detection of a frame pulse point in the MUSE signal, an HD detection signal which is synchronized with an HD point of 128 level or the phase reference point of a sync signal, and a clamp pulse for clamping the MUSE signal according to the HD detection signal. The MUSE disk code reading circuit 16 produces a disk code detection pulse upon detection of a disk code inserted to a corresponding portion of the MUSE signal to the 564th line and examines the disk code for output of its content data. Both the MUSE sync detection circuit 15 and the MUSE disk code reading circuit 16 are depicted in more detail in Japanese Patent Application Laid-open No. 3-44869.

The HD detection signal from the MUSE sync detection circuit 15 is fed further to one of two input ports of a selector switch 17.

The two outputs from the NTSC 13 and the PAL demodulator circuit 14 are supplied to two input ports of a selector switch 18 respectively. The selector switch 18 when receives no switch command signal SA from the system controller 7 selects the output of the NTSC demodulator circuit 13 for transmission and when receives the signal SA selects the output of the PAL demodulator circuit 14. The demodulated signal passing through the selector switch 18 is transmitted to the NTSC/PAL sync detection circuit 20 and to the NTSC/PAL disk code reading circuit 21. The NTSC/PAL sync detection circuit 20 is arranged for separating a sync signal from the input NTSC or PAL video signal and in addition, has a band pass filter for extracting a pilot burst component of 3.75 MHz so that a pilot burst detection signal is delivered when the output of the band pass filter is more than a predetermined signal level. The NTSC/PAL disk code reading circuit 21 retrieves a disk code inserted to a given portion of the input video signal in response to horizontal and vertical sync signals from the NTSC/PAL sync detection circuit 20.

The horizontal sync signal from the NTSC/PAL sync detection circuit 20 is fed to the other input port of the selector switch 17.

The selector switch 17 when receives no switch command signal SB from the system controller 7 selects the output of the NTSC/PAL sync detection circuit 20 for transmission and when receives the signal SB selects the output of the MUSE sync detection circuit 15. The detection signal passing through the selector switch 17 is transferred to a second spindle error signal generator circuit 22. The second spindle error signal generator circuit 22 produces an error signal corresponding to a phase difference between the detection signal from the selector switch 17 and its reference signal. The error signal from the second spindle error signal generator 22 is then fed to one of two input ports of a selector switch 25.

The spindle motor 2 contains a built-in frequency generator 26 for generating FG pulses at a frequency corresponding to the revolution of the spindle motor 2. The FG pulses from the frequency generator 26 are fed to a first spindle error signal generator circuit 27 and to the system controller 7. The first spindle error signal generator circuit 27 is also coupled to the potentiometer 28 for receiving a voltage corresponding to the relative (or radial) position of the slider of the pickup 3 to the disk 1 from the same. The first spindle error signal generator circuit 27 produces an error signal corresponding to the product of the output voltage of the potentiometer 28 and the frequency of the FG pulse. The error signal from the first spindle error signal generator circuit 27 is then transmitted to the other input port of the selector switch 25. The selector switch 25 is activated by the ON command from the system controller 7 and more specifically, when receiving no switch command signal SC selects the error signal of the first spindle error signal generator circuit 27 for transmission and when receiving the signal SC selects the error signal of the second spindle error signal generator circuit 22. The error signal selected by the selector switch 25 is transferred as a drive signal through a drive amplifier 29 to the spindle motor 2 for controlling the rotational speed of the disk 1.

With the use of the arrangement described above, any of the disks of different signal formats according to NTSC, PAL, and MUSE systems can be played. In addition, the recording system for the disks includes two different types: CAV type in which the rotational speed of the disk is controlled to be constant and CLV type in which the relative moving speed of the pickup with respect to the disk is controlled to be constant. The disk 1 to be loaded is thus selected from six different disks which are distinct from each other in either the recording system or the signal format.

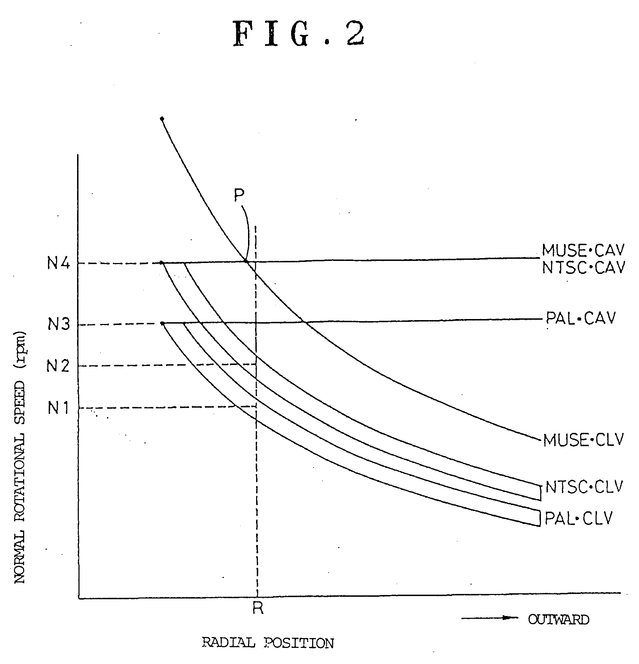

The relation between normal rotational speed for each of the six different disks, NTSC-CAV, NTSC-CLV, PAL-CAV, PAL-CLV, MUSE-CAV, and MUSE-CLV, and the relative (radial) position of the pickup with respect to the disk, is determined as shown in Fig. 2, as an example.

In Fig. 2, the MUSE-CAV disk and the NTSC-CAV disk are identical in the normal rotational speed because their frame frequency is about 30 Hz, which allows each track jump action during specific playback mode operation to be executed in the same manner using a common tracking servo system. For frequency modulating and recording a MUSE signal of 8.1 MHz onto a disk, an RF bandwidth of more than 23 MHz is ideally needed when an EFM audio signal multiplexing area at the low frequency range and a margin of 3 to 4 MHz for deviation are secured. Hence, the recording start position of the MUSE-CAV disk is set to a point P more outward in a radial direction than those of the other disks in order to allow a read action with the application of a practical laser beam.

This means, when the information reading point of the pickup 3 is at a point R slightly outward than the point P, any of the six disks can be read.

Accordingly, in the embodiment, the disk 1 is started for rotation upon setting of the information reading point of the pickup 3 to the point R and the signal format of data recorded on the disk 1 is identified when the rotation of the disk 1 comes to its normal rotational speed at the point R.

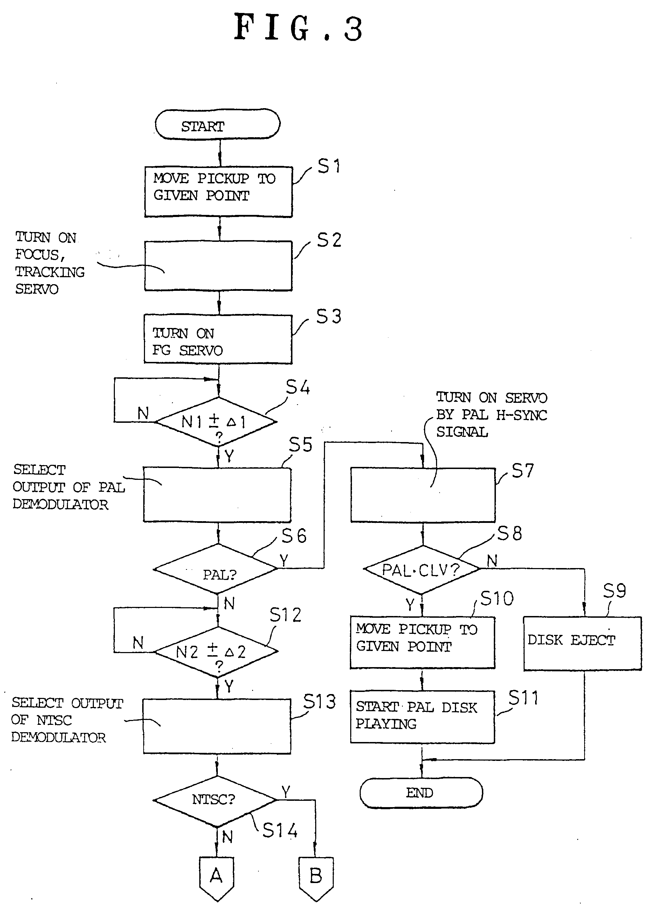

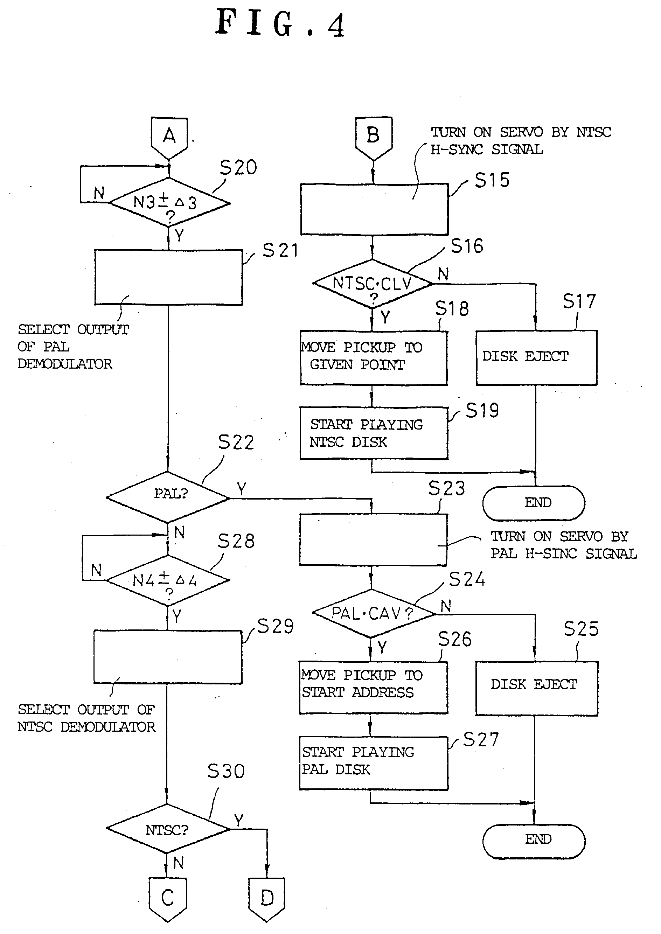

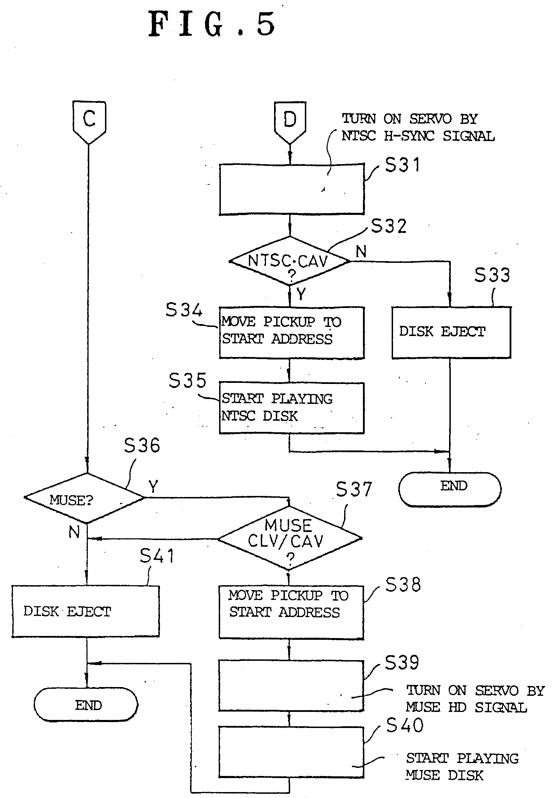

The operation of the processor in the system controller 7 will now be described referring to the flowcharts of Figs. 3 to 5.

When a play command is produced by key entry at an operation part (not shown) during the operation of e.g. a main routine, the processor of the system controller 7 delivers a drive command signal to the slider servo circuit 5 while monitoring the output voltage of the potentiometer 28 and as the result, the information reading point of the pickup 3 is moved (Step S1) to the point R, which is the innermost part of a program area, on the disk 1 which is selected from the six different signal format disks. Then, the processor supplies ON command signals to both the focus and tracking servo circuits (not shown) for starting a focus and a tracking servo control action (Step S2). The processor delivers another ON command signal to the selector switch 25 so that an FG servo loop is established from the frequency generator 26 through the first spindle error signal generator circuit 27, the selector switch 25, and the drive amplifier 29 to the spindle motor 2 (Step S3). The processor examines the frequency of the FG pulse to determine whether the rotation of the disk 1 comes to N1±Δ1 rpm (revolutions per minute) or not (Step S4).

If it is determined at Step S4 that the rotation of the disk 1 does not reach N1±Δ1 rpm, the processor repeats Step S4. When it is determined that the rotation comes to N1±Δ1 rpm, the processor delivers the switch command signal SA to the selector switch 18 which in turn passes the output of the PAL demodulator circuit 14 through (Step S5).

After execution of Step S5, the processor examines the presence of a pilot burst detection signal from the NTSC-PAL sync detector circuit 20 to determine whether the disk 1 carries a PAL video signal or not (Step S6). When it is determined at Step S6 that the disk 1 carries the PAL signal and thus, is a PAL disk, the processor stops supplying the switch command signal SB to the selector switch 17 and delivers the switch command signal SC to the selector switch 25 so that a servo loop is established for a horizontal sync signal separated from the PAL video input signal by the NTSC/PAL sync detector circuit 20 (Step S7). The processor then examines the output of the NTSC/PAL disk code reading circuit 21 to determine whether the disk 1 is a PAL disk of CLV type or not (Step S8).

If it is determined at Step S8 that the disk 1 is not a PAL disk of CLV type, the processor designates the disk 1 as an error disk and delivers OFF signals to the selector switch 25 and both the focus and tracking servo circuits (not shown) for stopping all the servo control actions and also, an eject command signal to a disk loading mechanism (not shown) for ejection of the disk 1 (Step S9) prior to restarting the routine which was in action before the execution of Step S1. When it is determined at Step S8 that the disk 1 is a PAL disk of CLV type, the processor while detecting the position of the information reading point of the pickup 3 to the disk 1 from the output data of the NTSC/PAL disk code reading circuit 21, delivers a drive command signal to the slider servo circuit 5 for repositioning of the information reading point of the pickup 3 to the start address point (where the frame number is 0) (Step S10). After execution of Step S10, the processor shifts the image playback processing circuit (not shown) to PAL mode to start playing the PAL disk (Step S11) and thereafter, restarts the routine which was in action before the start of Step S1.

If it is determined at Step S6 that the disk 1 is not a PAL disk, the processor examines the frequency of the FG pulse to determine whether the rotation of the disk 1 comes to N2±Δ2 rpm or not (Step S12). If it is determined at Step S12 that the rotation of the disk 1 does not reach N1±Δ1 rpm, the processor repeats Step S12. When it is determined at Step S12 that the rotation comes to N2±Δ2 rpm, the processor stop supplying the switch signal SA to the selector switch 18 which thus selects the output of the NTSC demodulator circuit 13 for transmission (step S13).

After execution of Step S13, the processor examines the presence of a horizontal sync signal from the NTSC/PAL sync detector circuit 20 to determine whether the disk 1 carries an NTSC video signal or not (Step S14). When it is determined at Step S14 that the disk 1 carries the NTSC signal and thus, is an NTSC disk, the processor stops supplying the switch command signal SB to the selector switch 17 and delivers the switch command signal SC to the selector switch 25 so that a servo loop is established for a horizontal sync signal separated from the NTSC video input signal by the NTSC/PAL sync detector circuit 20 (Step S15). The processor then examines the output of the NTSC/PAL disk code reading circuit 21 to determine whether the disk 1 is an NTSC disk of CLV type or not (Step S16).

If it is determined at Step S16 that the disk 1 is not an NTSC disk of CLV type, the processor designates the disk 1 as an error disk and delivers OFF signals to the selector switch 25 and both the focus and tracking servo circuits for stopping all the servo control actions and also, an eject command signal to the disk loading mechanism for ejection of the disk 1 (Step S17) prior to restarting the routine which was in action before the execution of Step S1. When it is determined at Step S16 that the disk 1 is an NTSC disk of CLV type, the processor while detecting the position of the information reading point of the pickup 3 to the disk 1 from the output data of the NTSC/PAL disk code reading circuit 21, delivers a drive command signal to the slider servo circuit 5 for repositioning of the information reading point of the pickup 3 to the start address point (where the frame number is 0) (Step S18). After execution of Step S18, the processor shifts the image playback processing circuit (not shown) to NTSC mode to start playing the NTSC disk (Step S19) and thereafter, restarts the routine which was in action before the start of Step S1.

If it is determined at Step S14 that the disk 1 is not an NTSC disk, the processor examines the frequency of the FG pulses to determine whether the rotation of the disk 1 comes to N3±Δ3 rpm or not (Step S20). If it is determined at Step S20 that the rotation of the disk 1 does not reach N3±Δ3 rpm, the processor repeats Step S20. When it is determined at Step S20 that the rotation comes to N3±Δ3 rpm, the processor stop supplying the switch signal SA to the selector switch 18 which thus selects the output of the PAL demodulator circuit 14 for transmission (step S21).

After execution of Step S21, the processor examines the presence of a pilot burst detection signal from the NTSC/PAL sync detector circuit 20 to determine whether the disk 1 is a PAL disk or not (Step S22). When it is determined at Step S22 that the disk 1 is a PAL disk, the processor stops supplying the switch command signal SB to the selector switch 17 and delivers the switch command signal SC to the selector switch 25 so that a servo loop is established for a horizontal sync signal separated from the PAL video input signal by the NTSC/PAL sync detector circuit 20 (Step S23). The processor then examines the output of the NTSC/PAL disk code reading circuit 21 to determine whether the disk 1 is a PAL disk of CAV type or not (Step S24).

If it is determined at Step S24 that the disk 1 is not a PAL disk of CAV type, the processor designates the disk 1 as an error disk and delivers OFF signals to the selector switch 25 and both the focus and tracking servo circuits for stopping all the servo control actions and also, an eject command signal to the disk loading mechanism for ejection of the disk 1 (Step S25) prior to restarting the routine which was in action before the execution of Step S1. When it is determined at Step S24 that the disk 1 is a PAL disk of CAV type, the processor while detecting the position of the information reading point of the pickup 3 to the disk 1 from the output data of the NTSC/PAL disk code reading circuit 21, delivers a drive command signal to the slider servo circuit 5 for repositioning of the information reading point of the pickup 3 to the start address point (where the frame number is 0) (Step S26). After execution of Step S26, the processor shifts the image playback processing circuit (not shown) to PAL mode to start playing the PAL disk (Step S27) and thereafter, restarts the routine which was in action before the start of Step S1.

If it is determined at Step S22 that the disk 1 is not a PAL disk, the processor examines the frequency of the FG pulses to determine whether the rotation of the disk 1 comes to N4±Δ4 rpm or not (Step S28). If it is determined at Step S28 that the rotation of the disk 1 does not reach N4±Δ4 rpm, the processor repeats Step S28. When it is determined at Step S28 that the rotation comes to N4±Δ4 rpm, the processor stop supplying the switch signal SA to the selector switch 18 which thus selects the output of the NTSC demodulator circuit 13 for transmission (step S29).

After execution of Step S29, the processor examines the presence of a horizontal sync signal from the NTSC/PAL sync detector circuit 20 to determine whether the disk 1 is an NTSC disk or not (Step S30). When it is determined at Step S30 that the disk 1 is an NTSC disk, the processor stops supplying the switch command signal SB to the selector switch 17 and delivers the switch command signal SC to the selector switch 25 so that a servo loop is established for a horizontal sync signal separated from the NTSC video input signal by the NTSC/PAL sync detector circuit 20 (Step S31). The processor then examines the output of the NTSC/PAL disk code reading circuit 21 to determine whether the disk 1 is an NTSC disk of CAV type or not (Step S32).

If it is determined at Step S32 that the disk 1 is not an NTSC disk of CAV type, the processor designates the disk 1 as an error disk and delivers OFF signals to the selector switch 25 and both the focus and tracking servo circuits for stopping all the servo control actions and also, an eject command signal to the disk loading mechanism (not shown) for ejection of the disk 1 (Step S33) prior to restarting the routine which was in action before the execution of Step S1. When it is determined at Step S32 that the disk 1 is an NTSC disk of CAV type, the processor while detecting the position of the information reading point of the pickup 3 to the disk 1 from the output data of the NTSC/PAL disk code reading circuit 21, delivers a drive command signal to the slider servo circuit 5 for repositioning of the information reading point of the pickup 3 to the start address point (where the frame number is 0) (Step S34). After execution of Step S34, the processor shifts the image playback processing circuit (not shown) to NTSC mode to start playing the NTSC disk (Step S35) and thereafter, restarts the routine which was in action before the start of Step S1.

If it is determined at Step S30 that the disk 1 is not an NTSC disk, the processor examines the presence of an FP detection pulse from the MUSE sync detector circuit 15 to determine whether the disk 1 carries a MUSE video signal or not (Step S36). When it is determined at Step S36 that the disk 1 carries the MUSE signal and thus, is a MUSE disk, the processor examines the output of the MUSE disk code reading circuit 16 to determine whether the disk 1 is a MUSE disk of CLV type or of CAV type or not (Step S37). If it is determined at Step S37 that the disk 1 is not a MUSE disk of CLV or CAV type, the processor designates the disk 1 as an error disk and delivers OFF signals to the selector switch 25 and both the focus and tracking servo circuits for stopping all the servo control actions and also, an eject command signal to the disk loading mechanism (not shown) for ejection of the disk 1 (Step S41) prior to restarting the routine which was in action before the execution of Step S1.

The foregoing arrangement allows a MUSE disk to be identified only when it carries in multiplex no pilot signal for time-base correction. A modified arrangement will now be described in which a MUSE disk carrying a pilot signal for time-base correction can also be identified by detection of the pilot signal.

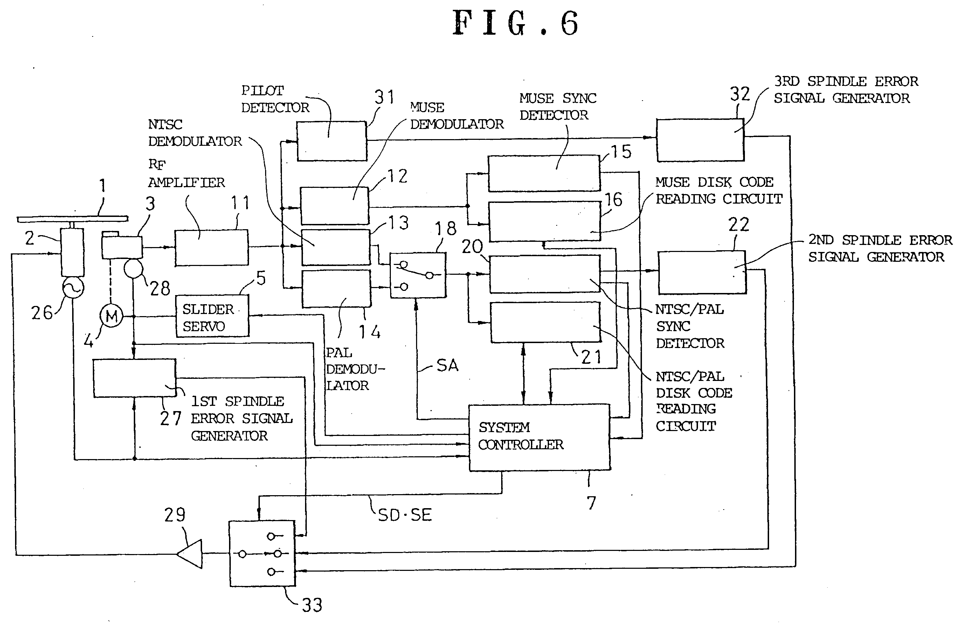

As shown in Fig. 6, a substantial arrangement of a disk 1, a spindle motor 2, a pickup 3, a slider motor 4, a slider servo circuit 5, a system controller 7, an RF amplifier 11, a MUSE demodulator circuit 12, an NTSC demodulator circuit 13, a PAL demodulator circuit 14, a MUSE sync detector circuit 15, a MUSE disk code reading circuit 16, a selector switch 18, an NTSC/PAL sync detector circuit 20, an NTSC/PAL disk code reading circuit 21, a frequency generator 26, a first spindle error signal generator circuit 27, a potentiometer 28, and a drive amplifier 29 is similar to that shown in Fig. 1. The modified arrangement is however adapted in which RF signals from the RF amplifier 11 are supplied to a pilot extracting circuit 31 as well as a MUSE 12, an NTSC 3, and a PAL demodulator circuit 14. The pilot extracting circuit 31 may be a band pass filter for separating a pilot signal for time-base correction from the input RF signal; in more particular, the pilot signal is multiplex carried on a lower frequency range than the low side band of a video FM signal in the RF signal. The pilot signal extracted by the pilot extracting circuit 31 is fed to a third spindle error signal generator circuit 32. The third spindle error signal generator circuit 32 produces an error signal corresponding to a phase difference between the pilot signal and its reference signal. The output of the third spindle error signal generator circuit 32 is coupled to one of three inputs of a selector switch 33.

The remaining two inputs of the selector switch 33 are coupled to both the first and second spindle error signal generators 27, 22. The second spindle error signal generator circuit 22 is in turn coupled to the output of the NTSC/PAL sync detector circuit 20. The selector switch 33 is arranged to receive ON, OFF, and two, SD and SE, switch command signals from the system controller 7. In action, the selector switch 33 is activated by an ON signal from the system controller 7 and selects the error signal of the first spindle error signal generator circuit 22 for transmission when non of the SD and SE signals is supplied, the error signal of the third spindle error signal generator circuit 32 when the SD signal is supplied, or the error signal of the first spindle error signal generator circuit 27 when the SE signal is supplied. The output of the selector switch 33 is coupled to the drive amplifier 29.

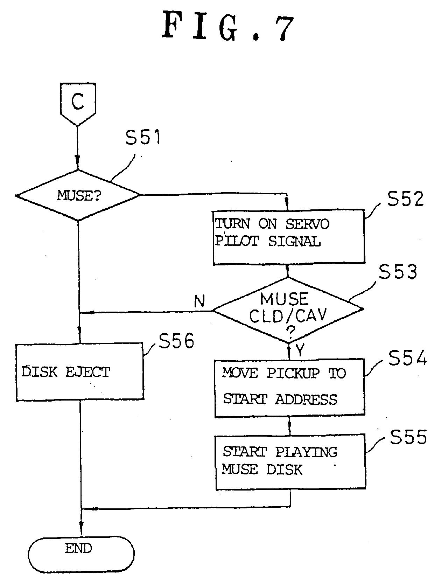

The operation of a processor in the system controller 7 is executed according to a flowchart in which the procedure from S36 to S41 shown in Figs. 3 to 5 is replaced with a routine shown in Fig. 7.

After it is determined that the disk 1 is not an NTSC disk as its rotation does not reach N4±Δ4 rpm (Step S30), the processor examines the presence of an FP detection pulse from the MUSE sync detector circuit 15 to determine whether the disk 1 is a MUSE disk or not (Step S51). When it is determined at Step S51 that the disk 1 is a MUSE disk, the processor delivers the switch command signal SE to the selector switch 33 which in turn selects the error signal of the third spindle error signal generator circuit 32 for starting a spindle servo action determined by the pilot signal (Step S52). The processor then examines the output of the MUSE disk code reading circuit 16 to determine whether the disk 1 is a MUSE disk of CLV or CAV type or not (Step S52). When it is determined at Step S52 that the disk 1 is a MUSE disk of CLV or CAV type, the processor while detecting the position of the information reading point of the pickup 3 to the disk 1 from the output data of the MUSE disk code reading circuit 16, delivers a drive command signal to the slider servo circuit 5 for repositioning of the information reading point of the pickup 3 to the start address point (where the frame number is 0) (Step S54). After execution of Step S54, the processor shifts an image playback processing circuit (not shown) to MUSE mode to start playing the MUSE disk (Step S55) and thereafter, restarts the routine which was in action before the start of Step S1.

If it is determined at Step S51 that the disk 1 is not a MUSE disk or at Step S53 that the disk 1 is a MUSE disk but not CLV nor CAV type, the processor designates the disk 1 as an error disk and delivers OFF signals to the selector switch 33 and both focus and tracking servo circuits (not shown) for stopping all the servo control actions and also, an eject command signal to a disk loading mechanism (not shown) for ejection of the disk 1 (Step S56) prior to restarting the routine which was in action before the execution of Step S1.

Although the actions of detecting NTSC and PAL sync signals and reading disk codes are executed with a common circuit according to the embodiment, they can be carried out by their respective circuits.

Although the frame detection pulse is examined to determine whether a MUSE signal is involved or not in the embodiment, the presence of a pilot signal will be checked for the purpose when the pilot signal is multiplex carried on the RF signal as shown in Figs. 6 and 7. Also, the second embodiment shown in Figs. 6 and 7 permits the spindle servo action to be triggered by a pilot signal prior to start address searching action and an FG servo loop will thus be replaced by forcibly accelerating the disk at start time.

As described above, in the method and apparatus for identifying the signal format according to the present invention, an information reading point of the pickup is moved into a program area of the disk, and the rotation of the disk is started. Each time the rotational speed of the disk comes almost equal to a normal rotational speed of each of the plurality of disks of different signal formats, it is examined whether or not a signal processing corresponding to a signal format of one of the plurality of disks, whose normal rotational speed is almost equal to a current value of the rotational speed of the disk, is appropriate for processing a signal read out from the disk by the pickup. Then, the signal format of the disk can be identified through the examination, so that no particular circuit or arrangement for carrying out the signal format identification will be needed. Also, there is an advantage that the signal format can be identified regardless of the recording system or size of a disk.

## Claims

1. A method for identifying signal formats, in a disk player capable of playing a variety of disks carrying signals of different signal formats, comprising the steps of:
moving, in response to a command, an information reading point of a pickup radially with respect to a disk loaded in said disk player to a predetermined point which falls in a program area when any one of said disks of different signal formats is selected and loaded into said disk player;
starting rotation of said disk and increasing a rotational speed of said disk;
judging, each time said rotational speed of said disk comes almost equal to a normal rotational speed at said predetermined point of each of said disks of different signal formats, whether or not a signal processing corresponding to a signal format of one of said disks of different signal formats which has said normal rotational speed approximately equal to a current value of said rotational speed of said disk at said predetermined point, is appropriate for processing a read-out signal by said pickup; and
identifying the signal format of the read-out signal by a result of said judgement.

2. An apparatus for identifying signal formats, in a disk player capable of playing a variety of disks carrying signals of different signal formats, comprising:
means, in response to a command, for moving an information reading point of a pickup radially with respect to a disk loaded into said disk player to a predetermined point which falls in a program area when any one of said disks of different signal formats is selected and loaded into said disk player;
means for starting rotation of said disk and increasing a rotational speed of said disk;
means for judging, each time said rotational speed of said disk comes almost equal to a normal rotational speed at said predetermined point of each of said disks of different signal formats, whether or not a signal processing corresponding to a signal format of one of said disks of different signal formats which has said normal rotational speed approximately equal to a current value of said rotational speed of said disk at said predetermined point, is appropriate for processing a read-out signal by said pickup; and
means for identifying the signal format of said read-out signal by a result of judgement by said judging means.
